# EUROPEAN PATENT SPECIFICATION

(11) **EP 2 693 652 B1**
(45) Date of publication and mention of the grant of the patent: **30.09.2015**
(21) Application number: 11755699.3
(22) Date of filing: 26.04.2011
(51) Int. Cl.: H04B 7/00, H04W 76/02, H04W 84/18, H04B 7/26

(54) **BLUETOOTH DEVICE AND METHOD FOR CONNECTING BLUETOOTH DEVICES**
BLUETOOTH-GERÄTE UND VERFAHREN ZUR VERBINDUNG VON BLUETOOTH-GERÄTEN
DISPOSITIF BLUETOOTH ET PROCÉDÉ DE CONNEXION DE DISPOSITIFS BLUETOOTH

(43) Date of publication of application: 05.02.2014
(73) Proprietor: Huawei Device Co., Ltd., Shenzhen, Guangdong 518129 (CN)
(72) Inventor: DING, Ji, Guangdong 518129 (CN)
(74) Representative: Epping - Hermann - Fischer
(86) International application number: PCT/CN2011/073325
(87) International publication number: WO 2011/113382

(56) References cited:
- EP-A1- 1 672 844
- CN-A- 101 252 376
- US-A1- 2007 143 615
- US-A1- 2010 130 131
- US-A1- 2011 119 491

## Description

### TECHNICAL FIELD

Embodiments of the present invention relate to communications technologies, and in particular, to a bluetooth® device connection method and a bluetooth® device.

### BACKGROUND

Bluetooth® (Bluetooth®) is a radio technology supporting short-distance communication (usually within 10 m) between devices, works at a globally available 2.4 GHz radio wave band, and is capable of transmitting data between devices such as a mobile phone, a personal digital assistant (Personal Digital Assistant, PDA for short), a notebook computer, a wireless headphone, an on-board tool, an adapter, and a printer. In embodiments of the present invention, a terminal device with a bluetooth® function may be called a bluetooth® device. Before two bluetooth® devices transmit data, a pairing connection must be performed, and during pairing, both must use a same connection identifier (for example: a pairing code) to establish a data connection between the two. When two bluetooth® devices establish a data connection for the first time, a connection identifier input by a user may be used to establish the data connection between the two bluetooth® devices; and the connection identifier is stored. When the two bluetooth® devices establish a data connection for the second time, the user does not need to input the connection identifier again, that is, the stored connection identifier may be used to establish the data connection between the two bluetooth® devices.

However, because storage space of a bluetooth® device is limited, it may be caused that a connection identifier corresponding to a to-be-connected bluetooth® device cannot be stored. Therefore, when two bluetooth® devices establish a data connection, a connection identifier input by a user needs to be obtained each time, thereby prolonging time for establishing a data connection, and decreasing efficiency for establishing a data connection.

European patent application EP 1 672 844 A1 discloses a method for providing a service determined according to a Bluetooth® PIN, wherein a first Bluetooth® device, which stores one or more Bluetooth® PINs matched to services having different security policies, ascertains the Bluetooth® PIN of a second Bluetooth® device and provides the service according to a security policy corresponding to the Bluetooth® PIN.

US patent application US 2007/143615A1 discloses a method for a first device to establish a wireless communication connection with a second device. The first device receives from the second device a signal indicating a class of device of the second device, and generates a PIN code comprising a plurality of characters. The plurality of characters comprises at least one alphabet character if the class of device of the second device indicates such alphabet character can be entered in the second device, otherwise the plurality of characters comprises only numerical characters.

### SUMMARY

Embodiments of the present invention provide a bluetooth® device connection method and a bluetooth® device, which are used to shorten time for establishing a data connection, and improve efficiency for establishing a data connection.

An embodiment of the present invention provides a bluetooth® device connection method, including:
determining that a device class of a to-be-connected bluetooth® device is an audio device class or a non-audio device class; and
if it is determined that the device class of the to-be-connected bluetooth® device is the audio device class, using a preset pairing code of an audio bluetooth® device to establish a data connection with the to-be-connected bluetooth® device;
if it is determined that the device class of the to-be-connected Bluetooth® device is the non-audio device class, obtaining a pairing code corresponding to the to-be-connected Bluetooth® device input by a user or stored previously to establish a data connection with the to-be-connected bluetooth® device.

An embodiment of the present invention further provides a bluetooth® device, including:
a determining unit, configured to determine that a device class of a to-be-connected bluetooth® device is an audio device class or a non-audio device class; and
a connecting unit, configured to, if the determining unit determines that the device class of the to-be-connected bluetooth® device is the audio device class, use a preset pairing code of an audio bluetooth® device to establish a data connection with the to-be-connected bluetooth® device; if it is determined that the device class of the to-be-connected Bluetooth® device is the non-audio device class, obtaining a pairing code corresponding to the to-be-connected Bluetooth® device input by a user or stored previously to establish a data connection with the to-be-connected bluetooth® device.

It may be known from the foregoing technical solutions that, in the embodiments of the present invention, a device class of a to-be-connected bluetooth® device is determined, and if it is determined that the device class of the to-be-connected bluetooth® device is an audio device class, a preset connection identifier corresponding to the to-be-connected bluetooth® device may be used to establish a data connection with the to-be-connected bluetooth® device, and there is no need to obtain a connection identifier corresponding to the to-be-connected bluetooth® device of the audio device class (for example: obtain a connection identifier input by a user or obtain a stored connection identifier), thereby shortening time for establishing a data connection, and improving efficiency for establishing a data connection.

### BRIEF DESCRIPTION OF DRAWINGS

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings according to these accompanying drawings without creative efforts.
FIG. 1 is a schematic flowchart of a bluetooth® device connection method according to a first embodiment of the present invention;
FIG. 2 is a schematic structural diagram of a bluetooth® device according to a second embodiment of the present invention;
FIG. 3 is another schematic structural diagram of a bluetooth® device according to the second embodiment of the present invention; and
FIG. 4 is another schematic structural diagram of a bluetooth® device according to the second embodiment of the present invention.

### DESCRIPTION OF EMBODIMENTS

To make the objectives, the technical solutions, and the advantages of the embodiments of the present invention clearer, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

It should be noted that, a bluetooth® device involved in the embodiments of the present invention includes, but is not limited to, a mobile phone, a PDA, a notebook computer, an MP3 player, an MP4 player, a wireless headphone, an on-board tool, an adapter, and a printer.

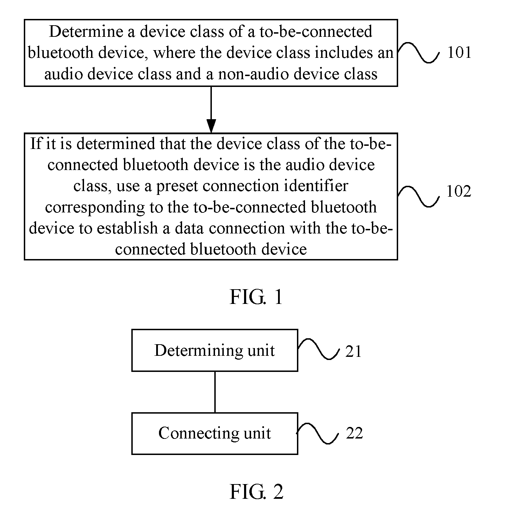

FIG. 1 is a schematic flowchart of a bluetooth® device connection method according to a first embodiment of the present invention. As shown in FIG. 1, the bluetooth® device connection method in this embodiment:
Step 101: Determine a device class of a to-be-connected bluetooth® device, where the device class includes an audio device class and a non-audio device class.

Specifically, the device class of the to-be-connected bluetooth® device may be determined according to attribute information of the to-be-connected bluetooth® device, namely, a bluetooth® major device class (Bluetooth® Major Device Class). For example, when a value of a bluetooth® major device class field is 0x0400, it indicates that the device class of the to-be-connected bluetooth® device is the audio device class; when the value of the bluetooth® major device class field is not 0x0400, it indicates that the device class of the to-be-connected bluetooth® device is the non-audio device class.

Step 102: If it is determined that the device class of the to-be-connected bluetooth® device is the audio device class, use a preset connection identifier corresponding to the to-be-connected bluetooth® device to establish a data connection with the to-be-connected bluetooth® device. Due to lack of an input interface and an input apparatus, a bluetooth® device of an audio device class, for example: a wireless headphone (a wireless headphone with a bluetooth® function), and an on-board tool (an on-board tool with a bluetooth® function), is generally pre-configured with a specific connection identifier (for example: 0000, and 1234) as a default pairing code before delivery. In this step, specifically, a bluetooth® identifier (that is, a specific connection identifier pre-configured before delivery) in the to-be-connected bluetooth® device for establishing a data connection may be preset to the connection identifier. Because the device class of the to-be-connected bluetooth® device in this case is the audio device class, the preset connection identifier corresponding to the to-be-connected bluetooth® device is a connection identifier of an audio device. In this embodiment, an executive body may provide a bluetooth® device of an audio device class with a user setting item (which may also be omitted, and when the user setting item is omitted, a default pairing code "0000" is used) of a connection identifier (pairing code), and allow a user to input a specific connection identifier as a default pairing code, for example: 0000, and 1234.

Further, if it is determined that the device class of the to-be-connected bluetooth® device is the non-audio device class, use a connection identifier corresponding to the to-be-connected bluetooth® device to establish a data connection with the to-be-connected bluetooth® device. Further, before this step, a step of obtaining a connection identifier corresponding to the to-be-connected bluetooth® device may be further included. Specifically, a connection identifier which corresponds to the to-be-connected bluetooth® device and is provided by a user may be obtained, or a stored connection identifier corresponding to the to-be-connected bluetooth® device may also be obtained.

In this embodiment, a device class of a to-be-connected bluetooth® device is determined, and if it is determined that the device class of the to-be-connected bluetooth® device is an audio device class, a preset connection identifier corresponding to the to-be-connected bluetooth® device may be used to establish a data connection with the to-be-connected bluetooth® device, and there is no need to obtain a connection identifier corresponding to the to-be-connected bluetooth® device of the audio device class (for example: obtain a connection identifier input by a user or obtain a stored connection identifier), thereby shortening time for establishing a data connection, and improving efficiency for establishing a data connection.

It should be noted that, for brevity of description, each of the foregoing method embodiment is described as a series of action combinations. However, persons skilled in the art should understand that the present invention is not limited to order of the described actions, because according to the present invention, some steps may adopt other order or may be performed simultaneously. Moreover, persons skilled in the art should be aware that the described embodiment in the specification belongs to an exemplary embodiment, and the involved actions and units are not necessarily required by the present invention.

In the foregoing embodiments, description of each embodiment has its emphasis. For a part that is not described in detail in a certain embodiment, reference may be made to related description in another embodiment.

FIG. 2 is a schematic structural diagram of a bluetooth® device according to a second embodiment of the present invention. As shown in FIG. 2, the bluetooth® device in this embodiment may include a determining unit 21 and a connecting unit 22. The determining unit 21 is configured to determine a device class of a to-be-connected bluetooth® device, where the device class includes an audio device class and a non-audio device class; and the connecting unit 22 is configured to, if the determining unit 21 determines that the device class of the to-be-connected bluetooth® device is the audio device class, use a preset connection identifier corresponding to the to-be-connected bluetooth® device to establish a data connection with the to-be-connected bluetooth® device.

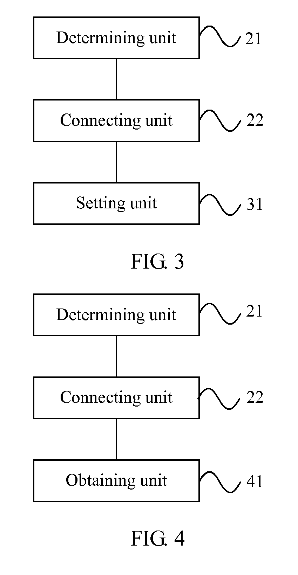

Further, as shown in FIG. 3, the bluetooth® device provided in this embodiment may further include a setting unit 31, configured to preset a bluetooth® identifier in the to-be-connected bluetooth® device for establishing a data connection to the connection identifier.

Further, the connecting unit 22 in this embodiment may be further configured to, if the determining unit 21 determines that the device class of the to-be-connected bluetooth® device is the non-audio device class, use a connection identifier corresponding to the to-be-connected bluetooth® device to establish a data connection with the to-be-connected bluetooth® device. Accordingly, as shown in FIG. 4, the bluetooth® device in this embodiment may further include an obtaining unit 41, configured to obtain the connection identifier corresponding to the to-be-connected bluetooth® device, so that the connecting unit 22 establishes the data connection with the to-be-connected bluetooth® device. Optionally, the obtaining unit 41 may specifically obtain a connection identifier which corresponds to the to-be-connected bluetooth® device and is provided by a user, or may also obtain a stored connection identifier corresponding to the to-be-connected bluetooth® device.

In this embodiment, a device class of a to-be-connected bluetooth® device is determined by a determining unit, and if the determining unit determines that the device class of the to-be-connected bluetooth® device is an audio device class, a connecting unit may use a preset connection identifier corresponding to the to-be-connected bluetooth® device to establish a data connection with the to-be-connected bluetooth® device, and there is no need to obtain a connection identifier corresponding to the to-be-connected bluetooth® device of the audio device class (for example: obtain a connection identifier input by a user or obtain a stored connection identifier), thereby shortening time for establishing a data connection, and improving efficiency of establishing a data connection.

Persons of ordinary skill in the art may understand that, all or part of the steps of the foregoing method embodiment may be implemented by a program instructing relevant hardware. The program may be stored in a computer readable storage medium. When the program is run, the steps included in the foregoing method embodiment are performed. The storage medium may be any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions recorded in the foregoing embodiments or make equivalent replacements to part of technical features of the technical solutions recorded in the foregoing embodiments; however, these modifications or replacements do not make the essence of the corresponding technical solutions depart from the scope of the technical solutions of the embodiments of the present invention

## Claims

1. A bluetooth® device connection method, comprising:
determining (101) that a device class of a to-be-connected bluetooth® device is an audio device class or a non-audio device class; and
if it is determined that the device class of the to-be-connected bluetooth® device is the audio device class, using (102) a preset pairing code of an audiobluetooth® device to establish a data connection with the to-be-connected bluetooth® device;
if it is determined that the device class of the to-be-connected Bluetooth® device is the non-audio device class, obtaining a pairing code corresponding to the to-be-connected Bluetooth® device input by a user or stored to establish a data connection with the to-be-connected bluetooth® device.

2. The method according to claim 1, further comprising:
presetting a bluetooth®specific pairing code pre-configured before delivery with the bluetooth® device of an audio device class to the pairing code of an audio device.

3. The method according to claim 1 or 2,
wherein the determining (101) that a device class of a to-be-connected bluetooth® device is an audio device class or a non-audio device class comprises: determining that a device class of a to-be-connected bluetooth® device is an audio device class or a non-audio device class according to a bluetooth® major device class of the to-be-connected bluetooth® device.

4. A bluetooth® device, comprising:
a determining unit (21), configured to determine that a device class of a to-be-connected bluetooth® device is an audio device class or a non-audio device class; and
a connecting unit (22), configured to, if the determining unit determines that the device class of the to-be-connected bluetooth® device is the audio device class, use a preset pairing code corresponding to bluetooth®an audio device to establish a data connection with the to-be-connected bluetooth® device; if the determining unit determines that the device class of the to-be-connected bluetooth® device is the non-audio device class, obtain a pairing code corresponding to the to-be-connected bluetooth® device input by a user or stored to establish a data connection with the to-be-connected bluetooth® device.

5. The bluetooth® device according to claim 4, further comprising:
a setting unit (23), configured to set a bluetooth® identifier in the to-be-connected bluetooth® device for establishing a data connection to the pairing code.

6. The bluetooth® device according to claim 4 or 5, wherein the connecting unit is further configured to determine that a device class of a to-be-connected bluetooth® device is an audio device class or a non-audio device class according to a bluetooth® major device class of the to-be-connected bluetooth® device.

## Patentansprüche

1. Verfahren zum Verbinden eines Bluetooth®-Geräts, das die folgenden Schritte aufweist:
Feststellen (101), dass eine Geräteklasse eines zu verbindenden Bluetooth®-Geräts eine Audio-Geräteklasse oder eine Nicht-Audio-Geräteklasse ist; und
wenn festgestellt wird, dass die Geräteklasse des zu verbindenden Bluetooth®-Geräts die Audio-Geräteklasse ist, Verwenden (102) eines voreingestellten Paarungscodes eines Bluetooth®-Audiogeräts, um eine Datenverbindung mit dem zu verbindenden Bluetooth®-Gerät herzustellen;
wenn festgestellt wird, dass die Geräteklasse des zu verbindenden Bluetooth®-Geräts die Nicht-Audio-Geräteklasse ist, Beschaffen eines Paarungscodes, der dem zu verbindenden Bluetooth®-Gerät entspricht, der durch einen Benutzer eingegeben wird oder gespeichert ist, um eine Datenverbindung mit dem zu verbindenden Blue-tooth®-Gerät herzustellen.

2. Verfahren nach Anspruch 1, das ferner aufweist:
Voreinstellen eines Bluetooth®-spezifischen, vor der Auslieferung vorkonfigurierten Paarungscodes beim Bluetooth®-Gerät einer Audio-Geräteklasse auf den Paarungscode eines Audio Geräts.

3. Verfahren nach Anspruch 1 oder 2,
wobei das Feststellen (101), dass eine Geräteklasse eines zu verbindenden Blue-tooth®-Geräts eine Audio-Geräteklasse oder eine Nicht-Audio-Geräteklasse ist, aufweist: Feststellen, dass eine Geräteklasse eines zu verbindenden Bluetooth®-Geräts eine Audio-Geräteklasse oder eine Nicht-Audio-Geräteklasse gemäß einer Blue-tooth®-Hauptgeräteklasse des zu verbindenden Bluetooth®-Geräts ist.

4. Bluetooth®-Gerät, das Folgendes aufweist:
eine Feststellungseinheit (21), die konfiguriert ist festzustellen, dass eine Geräteklasse eines zu verbindenden Bluetooth®-Geräts eine Audio-Geräteklasse oder eine Nicht-Audio-Geräteklasse ist; und
eine Verbindungseinheit (22), die konfiguriert ist, wenn die Feststellungseinheit feststellt, dass die Geräteklasse des zu verbindenden Bluetooth®-Geräts die Audio-Geräteklasse ist, einen voreingestellten Paarungscode zu verwenden, der einem Blue-tooth®-Audiogerät entspricht, um eine Datenverbindung mit dem zu verbindenden Bluetooth®-Gerät herzustellen; wenn die Feststellungseinheit feststellt, dass die Geräteklasse des zu verbindenden Bluetooth®-Geräts die Nicht-Audio-Geräteklasse ist, einen Paarungscode zu beschaffen, der dem zu verbindenden Bluetooth®-Gerät entspricht, der durch einen Benutzer eingegeben wird oder gespeichert ist, um eine Datenverbindung mit dem zu verbindenden Bluetooth®-Gerät herzustellen.

5. Bluetooth®-Gerät nach Anspruch 4, das ferner aufweist:
eine Einstellungseinheit (23), die konfiguriert ist, eine Bluetooth®-Kennung im zu verbindenden Bluetooth®-Gerät zum Herstellen einer Datenverbindung zum Paarungscode einzustellen.

6. Bluetooth®-Gerät nach Anspruch 4 oder 5, wobei die Verbindungseinheit ferner konfiguriert ist, gemäß einer Bluetooth®-Hauptgeräteklasse des zu verbindenden Bluetooth®-Geräts festzustellen, dass eine Geräteklasse eines zu verbindenden Bluetooth®-Geräts eine Audio-Geräteklasse oder eine Nicht-Audio-Geräteklasse ist.

## Revendications

1. Procédé de connexion de dispositif bluetooth®, comprenant :
la détermination (101) du fait qu'une classe de dispositif d'un dispositif bluetooth® à connecter est une classe de dispositif audio ou une classe de dispositif non audio ; et
s'il est déterminé que la classe de dispositif du dispositif bluetooth® à connecter est la classe de dispositif audio, l'utilisation (102) d'un code d'appariement préréglé d'un dispositif audio bluetooth® afin d'établir une connexion de données au dispositif bluetooth® à connecter ;
s'il est déterminé que la classe de dispositif du dispositif bluetooth® à connecter est la classe de dispositif non audio, l'obtention d'un code d'appariement correspondant au dispositif bluetooth® à connecter saisi par un utilisateur ou stocké afin d'établir une connexion de données au dispositif bluetooth® à connecter.

2. Procédé selon la revendication 1, comprenant en outre :
le préréglage d'un code d'appariement bluetooth® spécifique préalablement configuré avant livraison avec le dispositif bluetooth® d'une classe de dispositif audio au code d'appariement d'un dispositif audio.

3. Procédé selon la revendication 1 ou 2, dans lequel la détermination (101) du fait qu'une classe de dispositif d'un dispositif bluetooth® à connecter est une classe de dispositif audio ou une classe de dispositif non audio comprend : la détermination du fait qu'une classe de dispositif d'un dispositif bluetooth® à connecter est une classe de dispositif audio ou une classe de dispositif non audio conformément à une classe majeure de dispositif bluetooth® du dispositif bluetooth® à connecter.

4. Dispositif bluetooth®, comprenant :
une unité de détermination (21), configurée pour déterminer qu'une classe de dispositif d'un dispositif bluetooth® à connecter est une classe de dispositif audio ou une classe de dispositif non audio ; et
une unité de connexion (22), configurée, si l'unité de détermination détermine que la classe de dispositif du dispositif bluetooth® à connecter est la classe de dispositif audio, pour utiliser un code d'appariement préréglé correspondant à un dispositif audio bluetooth® afin d'établir une connexion de données au dispositif bluetooth® à connecter ; si l'unité de détermination détermine que la classe de dispositif du dispositif bluetooth® à connecter est la classe de dispositif non audio, pour obtenir un code d'appariement correspondant au dispositif bluetooth® à connecter saisi par un utilisateur ou stocké afin d'établir une connexion de données au dispositif bluetooth® à connecter.

5. Dispositif bluetooth® selon la revendication 4, comprenant en outre :
une unité de réglage (23), configurée pour régler un identifiant bluetooth® dans le dispositif bluetooth® à connecter afin d'établir une connexion de données au code d'appariement.

6. Dispositif bluetooth® selon la revendication 4 ou 5, dans lequel l'unité de connexion est en outre configurée pour déterminer qu'une classe de dispositif d'un dispositif bluetooth® à connecter est une classe de dispositif audio ou une classe de dispositif non audio conformément à une classe majeure de dispositif bluetooth® du dispositif bluetooth® à connecter.
